# EUROPÄISCHE PATENTSCHRIFT

(11) **EP 3 390 859 B1**
(45) Veröffentlichungstag und Bekanntmachung des Hinweises auf die Patenterteilung: **10.03.2021**
(21) Anmeldenummer: 16766561.1
(22) Anmeldetag: 19.09.2016
(51) Int. Cl.: F16G 1/12, F16G 5/10, F16G 3/09, F16G 3/02, B65G 15/30, F16G 11/02, F16G 11/04, F16G 11/10

(54) **GURT ODER GURTSEGMENT**
BELT OR BELT SEGMENT
SANGLE OU SEGMENT DE SANGLE

(30) Priorität: 15.12.2015 DE 102015225256
(43) Veröffentlichungstag der Anmeldung: 24.10.2018
(73) Patentinhaber: ContiTech Transportbandsysteme GmbH, 30165 Hannover (DE)
(72) Erfinder: HÜLS, Achim, 30890 Barsinghausen (DE); MÖSCHEN-SIEKMANN, Michael, 37176 Nörten-Hardenberg (DE); RIEPL, Stanislaus, 30823 Garbsen (DE)
(74) Vertreter: Continental Corporation
(86) Internationale Anmeldenummer: PCT/EP2016/072091
(87) Internationale Veröffentlichungsnummer: WO 2017/102116

(56) Entgegenhaltungen:
- EP-A2- 0 483 630
- DE-B- 1 079 397
- DE-B- 1 101 062
- US-A- 3 105 390

## Beschreibung

Die Erfindung betrifft einen Gurt oder ein Gurtsegment gemäß des Oberbegriffs des Anspruchs 1 sowie ein Verbindungselement gemäß des Anspruchs 7.

Endlos geschlossene Gurte stellen geschlossen ringförmige Elemente dar, welche z.B. als Antriebsgurte wie z.B. Keilriemen zur Kraftübertragung verwendet werden. Sie können jedoch auch als Fördergurte dazu verwendet werden, z.B. lose Schüttgüter zu transportieren. Auch können sie verwendet werden, um als Raupenbänder bei Raupenfahrzeugen der Fortbewegung des Fahrzeugs zu dienen.

Derartige Gurte laufen i.Allg. um einen Antrieb und weitere Führungs- bzw. Stützrollen herum, um die Antriebsleistung auf ein Abtriebselement zu übertragen (Keilriemen), um die Antriebsleistung zum Materialtransport zu nutzen (Fördergurt) oder um ein Fahrzeug fortzubewegen (Raupenband). Hierzu weisen diese Gurte zum einen eine vorbestimmte Elastizität auf, welche z.B. durch die Verwendung eines Elastomermaterials wie z.B. Gummi als Basismaterial des Gurtes erreicht werden kann. Zum anderen weisen diese Gurte üblicherweise in Längsrichtung einen oder mehrere Festigkeitsträger zur Übertragung der Zugkräfte in Laufrichtung des Gurtes auf. Dies können z.B. Stahlseile sein, welche eine besonders hohe Kraftübertragung erlauben. Aber auch Textilgewebe sind als Festigkeitsträger üblich.

Derartige Gurte können z.B. als Keilriemen teilweise bereits geschlossen hergestellt werden. In den meisten Fällen z.B. als Fördergurte oder Raupenbänder werden die Gurte aufgrund ihrer Länge in Längsrichtung üblicherweise offen, d.h. als länglicher Körper, herstellt und auch so zum Ort der Anwendung transportiert. Dort werden sie dann endlos geschlossen. Dies kann z.B. durch Zusammenvulkanisieren der beiden Enden erfolgen, was jedoch ein zerstörungsfreies wieder Trennen der Enden und damit Öffnen des Gurtes z.B. bei Verschleiß oder Beschädigung ausschließt. Ferner ist hierzu ein großer Aufwand vor Ort bei der Anwendung erforderlich.

Daher ist es bekannt, die Enden der Festigkeitsträger an den beiden Enden des offenen Gurtes vom Elastomermaterial freizulassen bzw. freizulegen und diese mechanisch zu verbinden. Dies kann z.B. dadurch erfolgen, dass die jeweiligen Enden in einem jeweils gemeinsamen Kopplungselement eingeklemmt und die beiden Kopplungselemente z.B. scharnierartig mittels eines Kopplungsstabes miteinander verbunden werden. Durch die Aufteilung dieser mechanischen Klemmverbindung auf zwei Kopplungselemente, die dann gegeneinander verdrehbar sind, soll die Biegsamkeit des Gurtes als Ganzes im Bereich der Verbindung möglichst wenig eingeschränkt werden. Dies kann insbesondere bei kleinen Umlenkradien erforderlich sein.

Die WO 2013 174 666 A1 zeigt einen entsprechenden Gurt aus elastomerem Werkstoff mit einer Festigkeitsträgerlage aus in Längsrichtung des Gurtes verlaufenden, parallel zueinander angeordneten Stahlseilen. Die Stahlseilenden sind jeweils in einem Gurtendekörper eingeklemmt. Die beiden Gurtendekörper sind scharnierartig miteinander gekoppelt.

Aus der DE 10 2014 224 526.5 (unveröffentlicht) ist ein endlos schließbarer Gurt mit wenigstens einem in Längsrichtung des Gurtes verlaufendem Festigkeitsträger und einem gemeinsamen Verbindungselement bekannt, welches die beiden Festigkeitsträgerenden miteinander verbinden kann. Die beiden Festigkeitsträgerenden weisen jeweils wenigstens ein kraftschlüssig befestigtes Halteelement auf, welche durch das Verbindungselement in Längsrichtung formschlüssig gehalten werden können. Hierzu können die Festigkeitsträgerenden in dem jeweiligen Halteelement verpresst und dann in einen gemeinsamen Aufnahmeraum des Verbindungselements eingelegt werden. Auf diese Weise können die Halteelemente an den Festigkeitsträgerenden kraftschlüssig und z.B. mittels zinnenartiger Vorsprünge des Verbindungselements in Längsrichtung formschlüssig gehalten werden.

Die DE 10 2015 212 750.8 (unveröffentlicht) weist eine vergleichbare Halterung der Festigkeitsträgerenden auf, wobei hier die Festigkeitsträgerenden jeweils formschlüssig in getrennten Verbindungselementen mittels kraftschlüssig aufgepresster Halteelemente aufgenommen werden. Die beiden Verbindungselemente können scharnierartig zusammenwirken, um wie bei der WO 2013 174 666 A1 den endlosen Schluss des Gurtes herzustellen.

Die US 3 105 390 A betrifft, in Kombination mit einem verzahnten Riemen, eine Gurtverstärkung, die eine Vielzahl von Drahtseilen umfasst, die in Längsrichtung des Riemens verlaufen und darin eingebettet sind, wobei die Drahtseile aneinanderstoßende Enden aufweisen, Metallkugeln, die an den Drahtseilenden befestigt sind, andere Metallkugeln, die an den Längen der Drahtseile befestigt sind, wobei alle Kugeln in Paaren von Reihen angeordnet sind, die in Längsrichtung gleichmäßig über die Länge des Riemens verteilt sind, wobei die Kugeln jeder Reihe dicht beieinander liegen und die Kugeln einer Reihe eines Paares den Kugeln der anderen Reihe desselben Paares zugewandt sind, wobei die Kugeln zusammen mit den Drahtseile in den Gürtel eingebettet sind, wobei die Drahtseile freie Enden aufweisen, die aus den erstgenannten Kugeln herausragen, und ein Schloss, das von dem Gürtel verführt wird und die erstgenannten Kugeln umschließt.

Die DE 1 101 062 B betrifft eine Vorrichtung zum Verbinden der Enden mehrerer nebeneinanderliegender Seile mittels durch Halteglieder formschlüssig miteinander verbundener Klemmbacken, die auf die Enden der Seile einwirken. Den Enden der Seile ist eine gemeinsame Klemmhülse zugeordnet ist, die sich über sämtliche Seile erstreckende, paarweise angeordnete Klemmbacken umschließt. Die Halteglieder können ausgebildet sein, sich als kegelförmige Hülsen in kegelförmige Ausnehmungen der Klemmhülse hinein zu erstrecken, um dort formschlüssig gehalten zu werden.

Nachteilig ist hierbei, dass sich die Festigkeitsträgerenden in den Halteelementen durch deren Verpressen üblicherweise verformen. Dies wird durch die senkrecht zum Querschnitt der Festigkeitsträger wirkenden Presskräfte beim Verpressen der Halteelemente bedingt. Hierbei wird der üblicherweise ursprünglich kreisrunde Querschnitt der Festigkeitsträger innerhalb des Halteelements zu einem ovalen Querschnitt verformt. Dieser ovale Querschnitt kann sich außerhalb des Halteelements fortsetzen. Die ovale Deformierung kann dabei mit zunehmendem Abstand vom Halteelement in Längsrichtung abnehmen.

Wird der oval deformierte Bereich des Festigkeitsträgers, welcher außerhalb des Halteelements liegt, in eine zylindrische Öffnung wie z.B. eine Bohrung des Verbindungselements geführt, welche an sich dem zylindrischen Querschnitt des Festigkeitsträgers entspricht, so kann dies zu einer Umlenkung einzelner radial außenliegender Litzen des Festigkeitsträgers an den Kanten der zylindrischen Öffnungen führen. Durch diese Umlenkung bzw. ein Knicken des ovalen Festigkeitsträgers an den Kanten der zylindrischen Öffnung kann es zu einer Schädigung bzw. Durchtrennung dieser Litzen kommen, wodurch die übertragbare Zugkraft des Festigkeitsträgers reduziert werden und dieser bei zu großen Zugbelastungen reißen kann.

Eine Aufgabe der vorliegenden Erfindung ist es, einen endlos schließbaren Gurt bzw. einen endlos geschlossenen Gurt der eingangs beschriebenen Art bereit zu stellen, der die zuvor beschrieben Nachteile vermeidet. Insbesondere soll die Lebensdauer eines derartigen Gurtes erhöht werden. Insbesondere soll ein derartiger Gurt bereitgestellt werden, bei dem eine Umlenkung eines Festigkeitsträgers bzw. einzelner Litzen eines Festigkeitsträgers an den Kanten der Öffnung des Verbindungselements vermieden werden kann. Zumindest soll eine Alternative zu bekannten mechanischen Verbindungen derartiger Gurte bereitgestellt werden.

Die Aufgabe wird erfindungsgemäß durch einen Gurt oder ein Gurtsegment mit den Merkmalen gemäß Anspruch 1 sowie durch ein Verbindungselement mit den Merkmalen gemäß Anspruch 7 gelöst. Vorteilhafte Weiterbildungen sind in den Unteransprüchen beschrieben.

Somit betrifft die vorliegende Erfindung einen Gurt oder ein Gurtsegment mit einer Mehrzahl von in Längsrichtung verlaufenden und parallel zueinander angeordneten Festigkeitsträgern, welches vorzugsweise Stahlseile sind, welche hohe Zugkräfte übertragen können. Unter Längsrichtung ist die Richtung zu verstehen, in der der Gurt bzw. das Gurtsegment endlos geschlossen ist bzw. geschlossen werden kann. Hierzu senkrecht erstreckt sich die Querrichtung, welche auch als Breite bezeichnet werden kann, sowie die Höhe bzw. Dicke des Gurtes bzw. Gurtsegments.

Der Gurt oder das Gurtsegment weist ferner ein Verbindungselement auf, welches ein Ende des Gurtes bzw. des Gurtsegments bildet und zur Verbindung mit einem weiteren Verbindungselement des anderen Endes des Gurts bzw. mit einem Ende eines weiteren Gurtsegments ausgebildet ist oder welches zur Verbindung zweier Enden des Gurtes bzw. des Gurtsegments ausgebildet ist. Mit anderen Worten kann über zwei derartige Verbindungselemente, welche jeweils ein Ende des Gurtes bzw. eines Gurtsegments aufnehmen, eine z.B. scharnierartige Kopplung der beiden Verbindungselemente hergestellt werden. Hierdurch kann ermöglicht werden, dass sich dieser Kopplungsbereich einer Umlenkung des geschlossenen Gurtes um z.B. eine Trommel besser anpassen kann.

Ferner kann ein einziges Verbindungselement beide Enden des Gurtes bzw. zweier Gurtsegmente aufnehmen und hierdurch eine direkte und starre Verbindung zwischen diesen herstellen. Eine derartige Verbindung kann mechanisch einfacher und robuster sein sowie eine geringere Länge in Längsrichtung aufweisen. Ein Gurt kann durch die Verbindung seiner beiden Enden endlos geschlossen werden oder mehrere Gurtsegmente können über die Verbindung ihrer Enden zu einem Gurt endlos geschlossen werden.

In beiden Fällen ist hierzu wenigstens ein Ende eines Festigkeitsträgers mit wenigstens einem Klemmkörper kraftschlüssig verbunden. Dies kann vorzugsweise durch Verpressen des Klemmkörpers auf dem Ende des Festigkeitsträgers geschehen. Der Klemmkörper kann von dem Verbindungselement wenigstens in Längsrichtung durch eine Festigkeitsträgerdurchführung hindurch formschlüssig gehalten werden.

Der Gurt oder das Gurtsegment ist dadurch gekennzeichnet, dass die Festigkeitsträgerdurchführung in Längsrichtung eine dem Klemmkörper zugewandte Aufweitung aufweist. Unter einer Aufweitung ist eine Querschnittsvergrößerung der Festigkeitsträgerdurchführung an ihrem dem Klemmkörper zugewandten Ende zu verstehen. Hierdurch kann erfindungsgemäß eine Umlenkung eines Festigkeitsträgers bzw. einzelner Litzen eines Festigkeitsträgers an den Kanten der Festigkeitsträgerdurchführung vermieden werden, welche sonst zu einem Knicken und damit zur Beschädigungen der Litzen bzw. des Festigkeitsträgers führen könnte. Dies kann die zulässige Zugkraft des Festigkeitsträgers sowie dessen Lebensdauer erhöhen.

Vorzugsweise ist das Verbindungselement derart ausgebildet, dass es sich vollständig in den Querschnitt des Gurtes bzw. des Gurtsegments integrieren lässt. Hierunter ist zu verstehen, dass das Verbindungselement weder in der Höhe noch in der Breite über die Kontur des Gurtes bzw. Gurtsegments hinausragt. Auf diese Weise kann ein Einfluss auf das Laufverhalten des endlos geschlossenen Gurtes vermieden werden.

Gemäß einem weiteren Aspekt der vorliegenden Erfindung weist die dem Klemmkörper zugewandte Aufweitung eine hyperbolische Form auf.

Vorteilhaft ist bei einer hyperbolischen oder auch kegelförmigen Aufweitung, dass diese einen gleichmäßigen und nach außen hin radial zunehmenden Verlauf aufweist. Hierdurch werden Kanten oder dergleichen im Bereich der Öffnung der Festigkeitsträgerdurchführung vermieden, die zu einer Belastung und damit Beschädigung des Festigkeitsträgers führen könnten.

Gemäß einem weiteren Aspekt der vorliegenden Erfindung ist die Festigkeitsträgerdurchführung als Bohrung durch das Verbindungselement ausgebildet.

Auf diese Weise kann die Festigkeitsträgerdurchführung ringsherum vom Material des Verbindungselements umgeben sein, so dass die Kräfte des Formschlusses gleichmäßig übertragen werden können. Hierdurch kann eine größere Stabilität erzeugt werden. Dabei ist es erforderlich, dass die Enden der Festigkeitsträger durch die Bohrungen hindurch in die Klemmkörperaufnahme gesteckt werden, wo sie in entsprechende Aufnahmen des Klemmkörpers eingeführt und dann dort verpresst werden können.

Gemäß einem weiteren Aspekt der vorliegenden Erfindung ist die Festigkeitsträgerdurchführung als Nut durch das Verbindungselement ausgebildet.

Mit anderen Worten ist das Material des Verbindungselements in der Höhe unterbrochen, so dass die mit dem Klemmkörper versehenen Enden der Festigkeitsträger von einer Seite in die Nuten eingelegt werden können. Hierbei wird gleichzeitig der Klemmkörper in die Klemmkörperaufnahme eingelegt. Auf diese Weise kann das Verpressen unabhängig vom Verbindungselement vor diesem Schritt erfolgen.

Gemäß einem weiteren Aspekt der vorliegenden Erfindung weist die Festigkeitsträgerdurchführung ferner in Längsrichtung eine dem Klemmkörper abgewandte Aufweitung auf.

Auf diese Weise kann insbesondere bei einer Biegung des Gurtes z.B. an einer Trommel ein Einknicken der Festigkeitsträger vermieden werden. Mit anderen Worten kann erreicht werden, dass die Festigkeitsträger immer in der neutralen Phase verlaufen können. Dies vermeidet Beschädigungen der Festigkeitsträger und erhöht deren Lebensdauer bzw. die Lebensdauer des Gurtes.

Vorzugsweise ist auch diese Aufweitung der Festigkeitsträgerdurchführung kegelförmig ausgebildet. Hierdurch kann der zuvor beschriebenen Vorteile einfach umgesetzt werden. Dies gilt ebenso für eine hyperbolische Form der Aufweitung.

Gemäß einem weiteren Aspekt der vorliegenden Erfindung weist der Gurt bzw. das Gurtsegment einen elastomeren Grundkörper auf, in dem die Festigkeitsträger eingebettet sind, wobei die Enden der Festigkeitsträger von dem Material des elastomeren Grundkörpers freigelegt sind.

Das Material des elastomeren Grundkörpers ist vorzugsweise ein vulkanisiertes Gummi. Auf diese Weise kann ein elastischer Gurt bzw. ein elastisches Gurtsegment geschaffen werden. Hierbei ist unter dem Freilegen der Enden der Festigkeitsträger ein äußeres Freilegen von dem elastomeren Material des Grundkörpers zu verstehen, so dass die Enden der Festigkeitsträger wie z.B. Stahlseile nach außen blank erscheinen und aufgrund ihres geringen Querschnitts in die Klemmkörperaufnahmen des Klemmkörpers eingeführt und dort verpresst werden können.

Die vorliegende Erfindung betrifft auch ein Verbindungselement zur Verwendung bei einem Gurt oder einem Gurtsegment wie zuvor beschrieben, wobei das Verbindungselement wenigstens eine Festigkeitsträgerdurchführung aufweist, durch die ein Klemmkörper eines Endes eines Festigkeitsträgers wenigstens in Längsrichtung hindurch formschlüssig gehalten werden kann, wobei die Festigkeitsträgerdurchführung in Längsrichtung eine dem Klemmkörper zugewandte Aufweitung aufweist. Mittels eines derartigen Verbindungselements kann eine erfindungsgemäße Umsetzung der zuvor beschrieben Art der Verbindung zweier Gurtenden bzw. Gurtsegmentenden erfolgen.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines endlos geschlossenen Gurtes mit Verbindungselementen gemäß dem Stand der Technik von schräg oben;
- Fig. 2: einen Schnitt in Längsrichtung durch die Darstellung der Fig. 1;
- Fig. 3: eine perspektivische schematische Darstellung eines erfindungsgemäßen Verbindungselements an sich von schräg oben;
- Fig. 4: eine Detailansicht der Darstellung der Fig. 3; und
- Fig. 5: eine Detailansicht der Darstellung der Fig. 3 mit Festigkeitsträgerenden und Klemmkörpern.

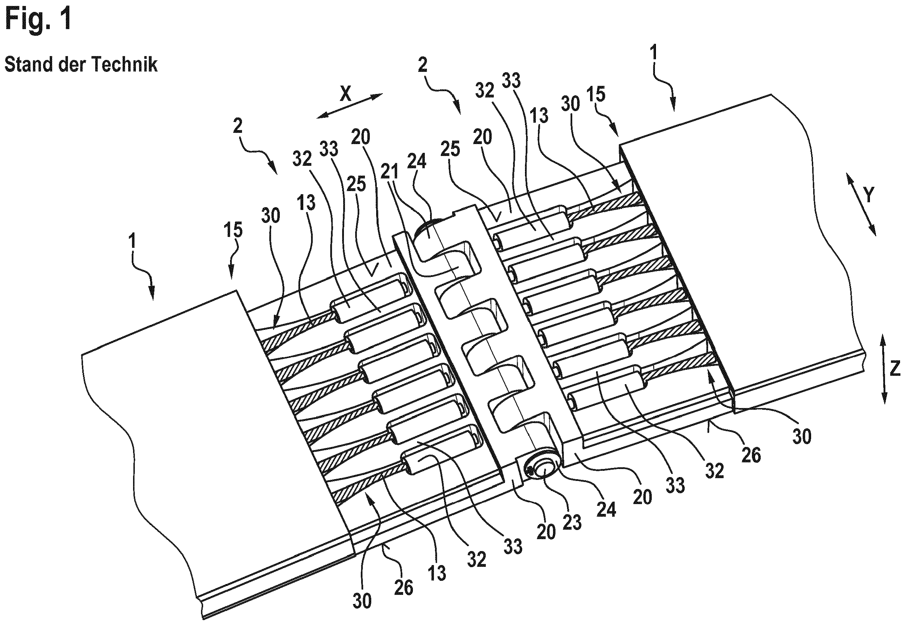

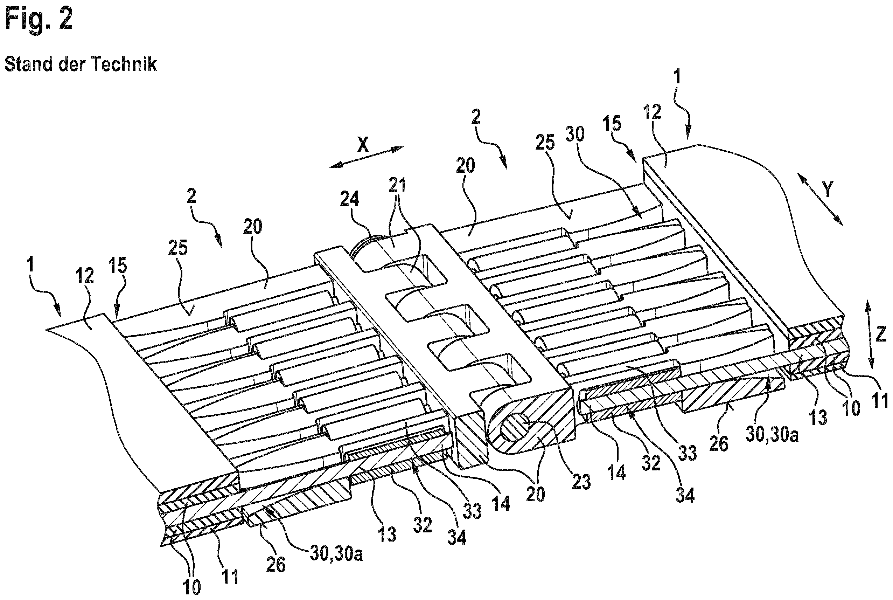

Fig. 1 zeigt eine perspektivische schematische Darstellung eines endlos geschlossenen Gurtes 1 mit Verbindungselementen 2 gemäß dem Stand der Technik von schräg oben. Fig. 2 zeigt einen Schnitt in Längsrichtung X durch die Darstellung der Fig. 1.

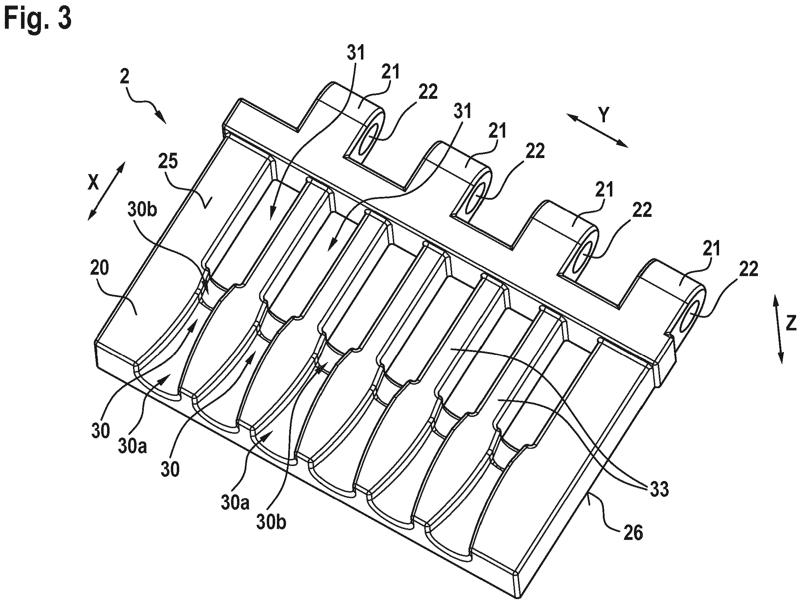

Der Gurt 1 ist in einer Längsrichtung X endlos geschlossen. Hierzu senkrecht erstreckt sich eine Querrichtung Y, welche auch als Breite Y bezeichnet werden kann. Hierzu jeweils senkrecht erstreckt sich die Höhe Z, welche auch als Dicke Z bezeichnet werden kann. Diese Richtungsangaben in kartesischen Koordinaten gelten entsprechend für ein Verbindungselement 2, welches in den Fig. 3 bis 5 einzeln dargestellt ist.

Das Verbindungselement 2 weist einen Grundkörper 20 auf, welcher aus einem harten oder härtbaren Stahl besteht. Der Grundkörper 20 weist an seiner einen Kante in Längsrichtung X mehrere zinnenartige Vorsprünge 21 auf, welche jeweils in Querrichtung Y verlaufende Querbohrungen 22 aufweisen. Der Grundkörper 20 weist eine gurtäußere Seite 25 auf, welche die Oberseite 25 des Grundkörpers 20 bildet. Der Grundkörper 20 weist ferner eine gurtinnere Seite 26 auf, welche die Unterseite 26 des Grundkörpers 20 bildet.

Das Verbindungselement 2 weist ferner eine Mehrzahl von Klemmkörperaufnahmen 31 auf, welche jeweils als rechteckige Aussparung innerhalb des Grundkörpers 20 ausgebildet sind, vgl. auch Fig. 3. Die Klemmkörperaufnahmen 31 sind zur Oberseite 25 und zur Unterseite 26 hin offen ausgebildet und in Querrichtung Y voneinander durch in Längsrichtung X verlaufende Stege 33 getrennt. Die Stege 33 sind Bestandteil des Grundkörpers 20 und können Kräfte in Längsrichtung X übertragen und hierdurch einem Verzug des Verbindungselements 2 aufgrund von Belastungen in Längsrichtung X entgegenwirken.

Von den Klemmkörperaufnahmen 31 erstreckt sich jeweils eine Festigkeitsträgerdurchführung 30 in Längsrichtung X in entgegengesetzter Richtung zu den zinnenartigen Vorsprüngen 21 durch den Grundkörper 20 hindurch. Die Festigkeitsträgerdurchführungen 30 weisen jeweils zum Gurt 1 hin eine der Klemmkörperaufnahme 31 abgewandte Aufweitung 30a auf. Die Festigkeitsträgerdurchführungen 30 sind in Form von Nuten 30 ausgeführt.

In den Klemmkörperaufnahmen 31 ist jeweils ein entsprechend geformter Klemmkörper 32 angeordnet. Die Klemmkörper 32 sind jeweils zylindrisch ausgebildet und weisen eine in Längsrichtung X verlaufende zylindrische Festigkeitsträgeraufnahme 34 auf, in die die Enden 14 von Festigkeitsträgern 13 in Form von Stahlseilen 13 durch Verpressen geklemmt sind, vgl. z.B. Fig. 2. Die Stahlseile 13 sind hierzu an ihren Enden 14 von dem Material eines elastomeren Grundkörpers 10 des Gurtes 1 freigelegt.

Der elastomere Grundkörper 10 weist in der Höhe Z eine untere elastomere Deckschicht 11 und eine obere elastomere Deckschicht 12 auf. Die freigelegten Enden 14 der Stahlseile 13 mit dem Klemmkörper 32 sowie dem Verbindungselement 2 bilden gemeinsam das Gurtende 15. Die beiden Verbindungselemente 2 zweier Gurtenden 15 desselben Gurts 1 oder zweier Gurtsegmente 1 sind mittels eines Kopplungsstabs 23 durch ihre Querbohrungen 22 miteinander gelenksartig verbunden. Der Kupplungsstab 23 wird in dieser Position in Querrichtung Y beidseitig durch Kopplungsstabsicherungen 24 gesichert.

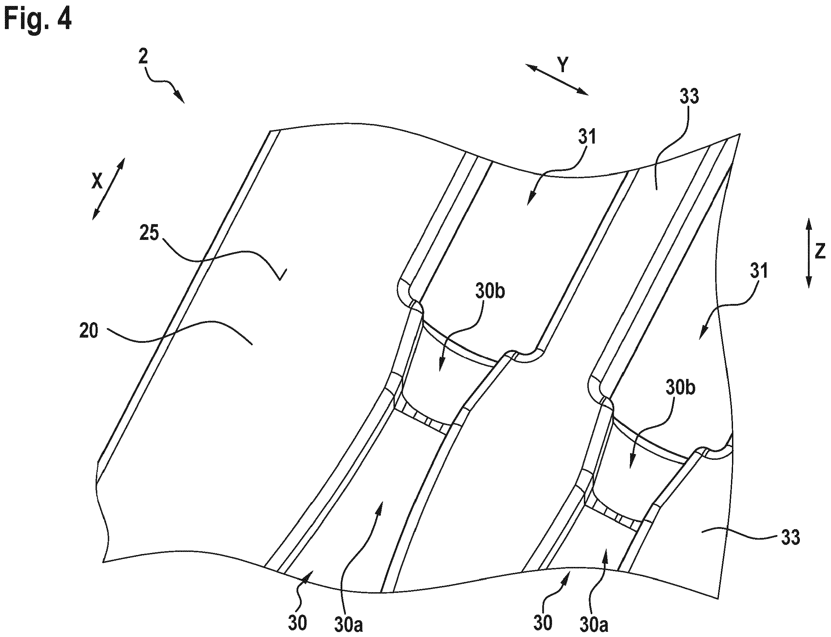

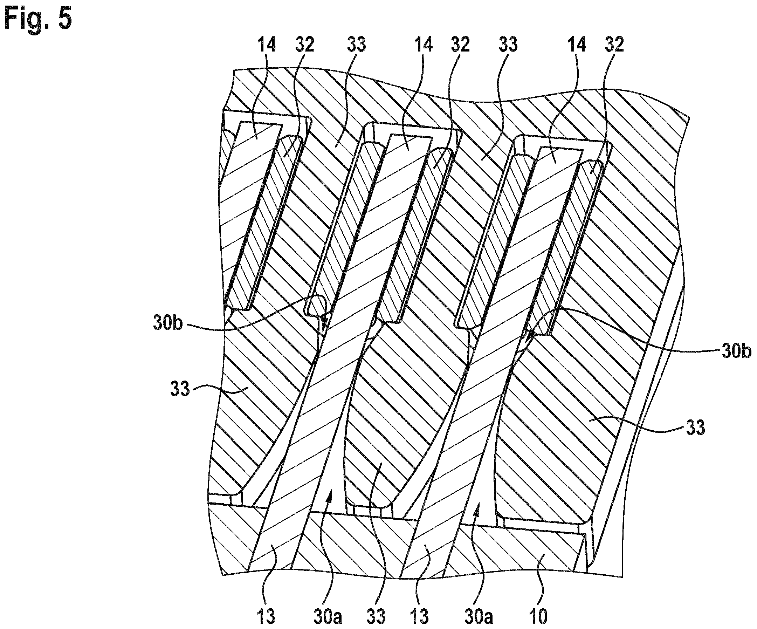

Fig. 3 zeigt eine perspektivische schematische Darstellung eines erfindungsgemäßen Verbindungselements 2 an sich von schräg oben. Fig. 4 zeigt eine Detailansicht der Darstellung der Fig. 3. Fig. 5 zeigt eine Detailansicht der Darstellung der Fig. 3 mit Festigkeitsträgerenden 14 und Klemmkörpern 32.

Erfindungsgemäß weist auch die der Klemmkörperaufnahme 31 bzw. dem Klemmkörper 32 zugewandte Öffnung jeder Festigkeitsträgerdurchführung 30 eine Aufweitung 30b auf, welche in ihrer Ausgestaltung der dieser in Längsrichtung X gegenüberliegenden Aufweitung 30a entspricht. Auf diese Weise kann ein Knicken der Festigkeitsträger 13 an den Übergängen von Festigkeitsträgerdurchführung 30 in die Klemmkörperaufnahmen 31 bzw. zu den Klemmkörpern 32 hin vermieden werden.

### Bezugszeichenliste (Teil der Beschreibung)

- X: Längsrichtung des Gurtes 1 bzw. Gurtsegments 1
- Y: Querrichtung bzw. Breite des Gurtes 1 bzw. Gurtsegments 1
- Z: Höhe bzw. Dicke des Gurtes 1 bzw. Gurtsegments 1

- 1: Gurt bzw. Gurtsegment
- 10: elastomerer Grundkörper
- 11: untere elastomere Deckschicht
- 12: obere elastomere Deckschicht
- 13: Festigkeitsträger bzw. Stahlseile
- 14: Ende der Festigkeitsträger 13
- 15: Gurtende bzw. Gurtsegmentende
- 2: Verbindungselemente
- 20: Grundkörper
- 21: zinnenartige Vorsprünge
- 22: Querbohrungen der zinnenartigen Vorsprünge
- 23: Kopplungsstab
- 24: Kopplungsstabsicherung
- 25: gurtäußere Seite bzw. Oberseite des Grundkörpers 20
- 26: gurtinnere Seite bzw. Unterseite des Grundkörpers 20
- 30: Festigkeitsträgerdurchführung des Grundkörpers 20, Bohrung bzw. Nut
- 30a: Klemmkörper abgewandte bzw. außenseitige Aufweitung der Festigkeitsträgerdurchführung 30
- 30b: Klemmkörper zugewandte bzw. innenseitige Aufweitung der Festigkeitsträgerdurchführung 30
- 31: Klemmkörperaufnahme
- 32: Klemmkörper
- 33: Stege des Grundkörpers 20 in Längsrichtung X
- 34: Festigkeitsträgeraufnahme des Klemmkörpers 32 bzw. der Klemmkörper 32

## Patentansprüche

1. Gurt (1) oder Gurtsegment (1), mit
einer Mehrzahl von in Längsrichtung (X) verlaufenden und parallel zueinander angeordneten Festigkeitsträgern (13), und
einem Verbindungselement (2), welches ein Ende (15) des Gurtes (1) bzw. des Gurtsegments (1) bildet und zur Verbindung mit einem weiteren Verbindungselement (2) des anderen Endes (15) des Gurts (1) bzw. mit einem Ende (15) eines weiteren Gurtsegments (1) ausgebildet ist oder welches zur Verbindung zweier Enden (15) des Gurtes (1) bzw. des Gurtsegments (1) ausgebildet ist,
wobei wenigstens ein Ende (14) eines Festigkeitsträgers (13) mit wenigstens einem Klemmkörper (32) kraftschlüssig verbunden ist,
wobei der Klemmkörper (32) von dem Verbindungselement (2) in einer Klemmkörperaufnahme (31) formschlüssig gehalten werden kann, wobei sich von der Klemmkörperaufnahme jeweils eine Festigkeitsträgerdurchführung (30) in Längsrichtung (X) erstreckt, **dadurch gekennzeichnet, dass**
die Festigkeitsträgerdurchführung (30) in Längsrichtung (X) eine dem Klemmkörper (32) zugewandte Aufweitung (30b) aufweist.

2. Gurt (1) oder Gurtsegment (1) gemäß Anspruch 1,
wobei die dem Klemmkörper (32) zugewandte Aufweitung (30b) eine hyperbolische Form aufweist.

3. Gurt (1) oder Gurtsegment (1) gemäß Anspruch 1 oder 2,
wobei die Festigkeitsträgerdurchführung (30) als Bohrung (30) durch das Verbindungselement (2) ausgebildet ist.

4. Gurt (1) oder Gurtsegment (1) gemäß Anspruch 1 oder 2,
wobei die Festigkeitsträgerdurchführung (30) als Nut (30) durch das Verbindungselement (2) ausgebildet ist.

5. Gurt (1) oder Gurtsegment (1) gemäß einem der vorherigen Ansprüche,
wobei die Festigkeitsträgerdurchführung (30) ferner in Längsrichtung (X) eine dem Klemmkörper (32) abgewandte Aufweitung (30a) aufweist.

6. Gurt (1) oder Gurtsegment (1) gemäß einem der vorherigen Ansprüche,
wobei der Gurt (1) bzw. das Gurtsegment (1) einen elastomeren Grundkörper (10) aufweist, in dem die Festigkeitsträger (13) eingebettet sind,
wobei die Enden (14) der Festigkeitsträger (13) von dem Material des elastomeren Grundkörpers (10) freigelegt sind.

7. Verbindungselement (2) zur Verwendung bei einem Gurt (1) oder Gurtsegment (1) gemäß einem der vorherigen Ansprüche,
wobei das Verbindungselement (2) wenigstens eine Klemmkörperaufnahme (31)
aufweist, in die ein Klemmkörper (32) eines Endes (15) eines Festigkeitsträgers (13) gehalten werden kann, wobei sich von der Klemmkörperaufnahme jeweils eine Festigkeitsträgerdurchführung (30) in Längsrichtung (X) erstreckt, **dadurch gekennzeichnet, dass** die Festigkeitsträgerdurchführung (30) in Längsrichtung (X) eine dem Klemmkörper (32) zugewandte Aufweitung (30b) aufweist.

## Claims

1. Belt (1) or belt segment (1), having
a plurality of strength members (13) that run in the longitudinal direction (X) and are disposed so as to be mutually parallel, and
a connection element (2) which forms one end (15) of the belt (1), or of the belt segment (1), respectively, and is configured to be connected to a further connection element (2) at the other end (15) of the belt (1) or to an end (15) of a further belt segment (1), respectively, or is configured to connect two ends (15) of the belt (1), or of the belt segment (1), respectively,
wherein at least one end (14) of a strength member (13) is connected in a force-fitting manner to at least one clamping body (32),
wherein the clamping body (32) can be held in a form-fitting manner in a clamping body receptacle (31) by the connection element (2), wherein one strength member leadthrough (30) extends in each case from the clamping body receptacle in the longitudinal direction (X),
**characterized in that**
the strength member leadthrough (30) in the longitudinal direction (X) has a widening (30b) facing the clamping body (32).

2. Belt (1) or belt segment (1) according to Claim 1, wherein the widening (30b) facing the clamping body (32) has a hyperbolic shape.

3. Belt (1) or belt segment (1) according to Claim 1 or 2,
wherein the strength member leadthrough (30) is configured as a bore (30) through the connection element (2).

4. Belt (1) or belt segment (1) according to Claim 1 or 2,
wherein the strength member leadthrough (30) is configured as a groove (30) through the connection element (2).

5. Belt (1) or belt segment (1) according to one of the preceding claims,
wherein the strength member leadthrough (30) in the longitudinal direction (X) furthermore has a widening (30a) facing away from the clamping body (32) .

6. Belt (1) or belt segment (1) according to one of the preceding claims,
wherein the belt (1) or the belt segment (1), respectively, has an elastomeric main body (10) in which the strength members (13) are embedded, wherein the ends (14) of the strength members (13) are exposed by the material of the elastomeric main body (10).

7. Connection element (2) for use in a belt (1) or belt segment (1) according to one of the preceding claims,
wherein the connection element (2) has at least one clamping body receptacle (31) in which a clamping body (32) of an end (15) of a strength member (13) can be held, wherein one strength member leadthrough (30) extends in each case from the clamping body receptacle in the longitudinal direction (X), **characterized in that** the strength member leadthrough (30) in the longitudinal direction (X) has a widening (30b) facing the clamping body (32).

## Revendications

1. Sangle (1) ou segment de sangle (1), comprenant
une pluralité de supports de renforcement (13) s'étendant dans la direction longitudinale (X) et disposés en parallèle les uns aux autres, et
un élément de liaison (2) qui forme une extrémité (15) de la sangle (1) ou du segment de sangle (1) et est réalisé pour être relié à un autre élément de liaison (2) de l'autre extrémité (15) de la sangle (1) ou à une extrémité (15) d'un autre segment de sangle (1) ou pour relier deux extrémités (15) de la sangle (1) ou du segment de sangle (1),
au moins une extrémité (14) d'un support de renforcement (13) étant reliée par adhérence à au moins un corps de serrage (32),
le corps de serrage (32) pouvant être maintenu par complémentarité de forme par l'élément de liaison (2) dans un logement de corps de serrage (31), respectivement un passage de support de renforcement (30) s'étendant dans la direction longitudinale (X) à partir du logement de corps de serrage,
caractérisé (e) en ce que le passage de support de renforcement (30) présente dans la direction longitudinale (X) un élargissement (30b) tourné vers le corps de serrage (32).

2. Sangle (1) ou segment de sangle (1) selon la revendication 1, dans laquelle/lequel l'élargissement (30b) tourné vers le corps de serrage (32) présente une forme hyperbolique.

3. Sangle (1) ou segment de sangle (1) selon la revendication 1 ou 2, dans laquelle/lequel le passage de support de renforcement (30) est réalisé sous la forme d'un perçage (30) à travers l'élément de liaison (2) .

4. Sangle (1) ou segment de sangle (1) selon la revendication 1 ou 2, dans laquelle/lequel le passage de support de renforcement (30) est réalisé sous forme de rainure (30) à travers l'élément de liaison (2).

5. Sangle (1) ou segment de sangle (1) selon l'une quelconque des revendications précédentes, dans laquelle/lequel le passage de support de renforcement (30) présente en outre dans la direction longitudinale (X) un élargissement (30a) détourné du corps de serrage (32) .

6. Sangle (1) ou segment de sangle (1) selon l'une quelconque des revendications précédentes,
dans laquelle/lequel la sangle (1) ou le segment de sangle (1) présente un corps de base élastomère (10) dans lequel sont incorporés les supports de renforcement (13),
dans laquelle/lequel les extrémités (14) des supports de renforcement (13) sont exposées par le matériau du corps de base élastomère (10).

7. Élément de liaison (2) destiné à une utilisation avec une sangle (1) ou un segment de sangle (1) selon l'une quelconque des revendications précédentes,
l'élément de liaison (2) présentant au moins un logement de corps de serrage (31) dans lequel un corps de serrage (32) d'une extrémité (15) d'un support de renforcement (13) peut être maintenu, respectivement un passage de support de renforcement (30) s'étendant dans la direction longitudinale (X) à partir du logement de corps de serrage,
**caractérisé en ce que** le passage de support de renforcement (30) présente dans la direction longitudinale (X) un élargissement (30b) tourné vers le corps de serrage (32).
